# EUROPEAN PATENT SPECIFICATION

(11) **EP 3 783 337 B1**
(45) Date of publication and mention of the grant of the patent: **02.08.2023**
(21) Application number: 20183199.7
(22) Date of filing: 30.06.2020
(51) Int. Cl.: G01N 21/03, G01N 21/39

(54) **GAS ANALYZER**
GASANALYSATOR
ANALYSEUR DE GAZ

(30) Priority: 19.08.2019 JP 2019149998
(43) Date of publication of application: 24.02.2021
(73) Proprietor: YOKOGAWA ELECTRIC CORPORATION, Musashino-shi Tokyo 180-8750 (JP)
(72) Inventor: Umino, Yusaku, Musashino-shi, Tokyo 180-8750 (JP); Proctor, Phillip, Sugar Land, Texas 77478 (US)
(74) Representative: Osha Liang

(56) References cited:
- EP-A1- 1 724 567
- WO-A1-2010/146079
- WO-A1-2012/126469

## Description

### Technical Field

The present invention relates to a gas analyzer, a gas analyzer system comprising such a gas analyzer and a measurement method.

### Background

A gas analyzer for measuring predetermined components in a measurement gas by irradiating, with a light, the measurement gas introduced into a measurement cell and receiving the light passing through the measurement gas is known (for example, see patent document 1). Such a gas analyzer may be configured such that piping is connected to a measurement gas inlet penetrating a tube constituting a measurement cell and that the measurement gas is introduced into the measurement cell through the piping.

Patent document 2 describes a heatable flow-through measuring cell for a gas analyzer. The measuring cell has an inner tube terminating at each end with a respective end piece and a window held therein, transparent to radiation. An heating apparatus is provided for heating each end piece. An outer tube coaxially surrounds the inner tube so as to form a narrow gap. Thermal insulation surrounds the outer tube.

Patent document 3 describes a gas sensor comprising a gas measurement region designed such that the flow of gas in the region intrinsically serves to keep specific internal surfaces free of residues, e.g. soot particles. In particular, means are introduced ensuring a non-direct path of the gas in its flow from one end of the measurement region to the other, such as by transferring it into a vortex letting the gas whirl from one end of the measurement chamber to the other, by forming a turbulent flow of the gas.

Patent document 4 describes an absorption gas analyzer for measuring a concentration of at least a component gas in a sample gas, comprising a main absorption cell for containing the sample gas, and a narrow band emitter emitting electromagnetic radiation in at least a predetermined narrow wavelength band which is transmitted through the main absorption cell. A reflecting device is disposed for reflecting the electromagnetic radiation after transmission through the main absorption cell such that the electromagnetic radiation is transmitted again therethrough. At least a detector detects the electromagnetic radiation and provides at least an intensity signal in dependence upon the concentration of the at least a component gas.

### [Patent Documents]

[Patent Document 1] JP 2010-236877 A
[Patent Document 2] WO 2010/146079 A1
[Patent Document 3] WO 2012/126469 A1
[Patent Document 4] EP 1 724 567 A1

However, when configuring as above, when the ambient temperature changes, the temperature of the measurement gas within the measurement cell changes due to the influence thereof, and as a result, there is a risk that measurement precision of predetermined components in the measurement gas will be affected.

### Summary

One or more embodiments of the present invention provide a gas analyzer capable of mitigating the influence of ambient temperature changes on the temperature of a measurement gas within a measurement cell and therefore capable of improving measurement precision.

The invention provides a gas analyzer according to claim 1. A gas analyzer according to one or more embodiments is a gas analyzer for measuring predetermined components in a measurement gas introduced into a measurement cell by irradiating the measurement gas with light from a light emitter and receiving the light passing through the measurement gas with a light receiver. The gas analyzer comprises a measurement cell comprising an inner tube, and an outer tube surrounding the inner tube and defining an annular space between the inner tube and the outer tube. The annular space extends from a first axial end to a second axial end of the inner and outer tubes. The gas analyzer comprises further comprises a supply arranged at the second axial end for supplying the measurement gas into the annular space, an introduction port arranged at the first axial end for introducing the measurement gas into the inner tube, and means for introducing the measurement gas into the introduction port from the annular space between the inner tube and the outer tube. According to such a configuration, the space between the inner tube and the outer tube can be used not only as a flow path for introducing the measurement gas into the inner tube, but also as a heat insulating layer. Accordingly, it is possible to mitigate the influence of ambient temperature changes on the temperature of a measurement gas within a measurement cell, and thereby it is possible to improve measurement precision.

The light emitter and the light receiver may make part of a gas analyzer system incorporating such gas analyzer, or of the gas analyzer.

In one or more embodiments, the gas analyzer may comprise a temperature adjuster (e.g., heater) configured to adjust the temperature of the inner tube and the outer tube. According to such a configuration, as it is possible to efficiently adjust the temperature of the measurement gas before it is introduced into the inner tube, it is possible to make the temperature of the measurement gas within the inner tube more uniform, and thereby it is possible to further improve measurement precision.

In one or more embodiments, the temperature adjuster of the gas analyzer may comprise a heat insulating member (e.g., heat insulator) disposed on an outer peripheral surface of the outer peripheral pipe. According to such a configuration, it is possible to more efficiently adjust the temperature of the measurement gas before it is introduced into the inner tube.

In one or more embodiments, in the foregoing configuration, the gas analyzer may comprise the heat insulating member wound on the outer peripheral surface of the outer tube in a coil shape. According to such a configuration, it is possible to even more efficiently adjust the temperature of the measurement gas before it is introduced into the inner tube.

In one or more embodiments, in the foregoing configuration, the gas analyzer may comprise a heat insulator surrounding the outer tube. According to such a configuration, it is possible to mitigate the influence of ambient temperature changes on the temperature of the measurement gas within the measurement cell.

In one or more embodiments, in the foregoing configuration, the measurement cell of the gas analyzer may comprise a reflector configured to reflect light and the means for introducing the measurement gas into the inner tube may comprise an end member disposed at the first axial end of the inner tube and the outer tube. According to such a configuration, it is possible to enable size reduction of the gas analyzer due to a simple configuration.

In one or more embodiments, in the foregoing configuration, the end member of the gas analyzer may comprise an inflow port configured to let the measurement gas flow toward a back side of the reflector from the annular space between the inner tube and the outer tube, an outflow port configured to let the measurement gas flow into the introduction port from the back side of the reflector, and a temperature sensor disposed on the back side of the reflector. According to such a configuration, using the temperature sensor, the temperature of the measurement gas can be directly measured near the measurement cell without obstructing the path of light, and it can be used for measurement of predetermined components in the measurement gas. Furthermore, by providing not only an inflow port, but also an outflow port, it is possible to control gas retention within the end member, and thus it is possible to make the distribution of predetermined components in the measurement gas within the measurement cell more uniform. Accordingly, it is possible to further improve measurement precision.

In one or more embodiments, in the foregoing configuration, the temperature adjuster of the gas analyzer may be configured to adjust the temperature of the inner tube and outer tube based on a value measured by the temperature sensor disposed on the back side of the reflector. According to such a configuration, by adjusting the temperature of the double tube, it is possible to precisely adjust the temperature of the measurement gas within the measurement cell.

In one or more embodiments, in the foregoing configuration, one axial end part of the inner tube and outer tube of the gas analyzer may form an introduction port for introducing the measurement gas into the inner tube from between the inner tube and the outer tube. According to such a configuration, as it is possible to smoothly introduce the measurement gas into the inner tube from the introduction port, it is possible to make the temperature distribution of the measurement gas within the measurement cell more uniform, and thereby it is possible to further improve measurement precision.

In one or more embodiments, in the foregoing configuration, the gas analyzer may be a laser gas analyzer configured to use tunable diode laser absorption spectroscopy. According to such a configuration, it is possible to enable highly precise measurement using tunable diode laser absorption spectroscopy.

Further embodiments of the gas analyzer are defined in the dependent claims.

According to one or more embodiments of the present invention, it is possible to provide a gas analyzer capable of mitigating the influence of ambient temperature changes on the temperature of a measurement gas within a measurement cell and therefore capable of improving measurement precision.

According to one or more embodiments, a gas analyzer system is provided. The gas analyzer system may comprise a gas analyzer as defined in any of the embodiments described herein, a light emitter for irradiating light to a measurement gas introduced into the measurement cell, and a light receiver for receiving the light passing through the measurement gas.

The present invention also provides a method for measuring predetermined components in a measurement gas introduced into a measurement cell as defined in claim 16.

### Brief Description of Drawings

FIG. 1 is a planar view illustrating a gas analyzer according to one or more embodiments.
FIG. 2 is a cross-sectional view illustrating a portion of the gas analyzer illustrated in FIG. 1.

### Detailed Description

Embodiments of the present invention will be exemplified and described in detail below with reference to the drawings.

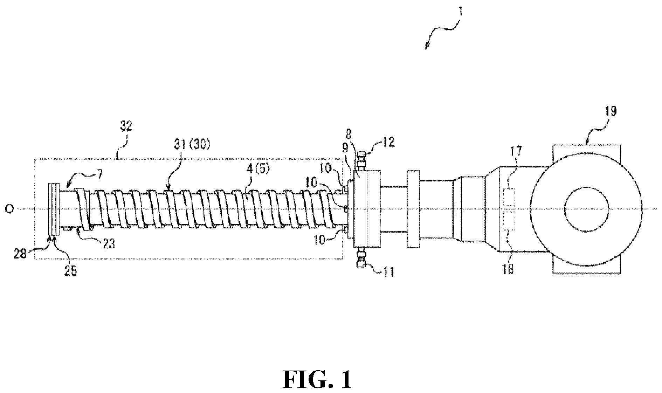

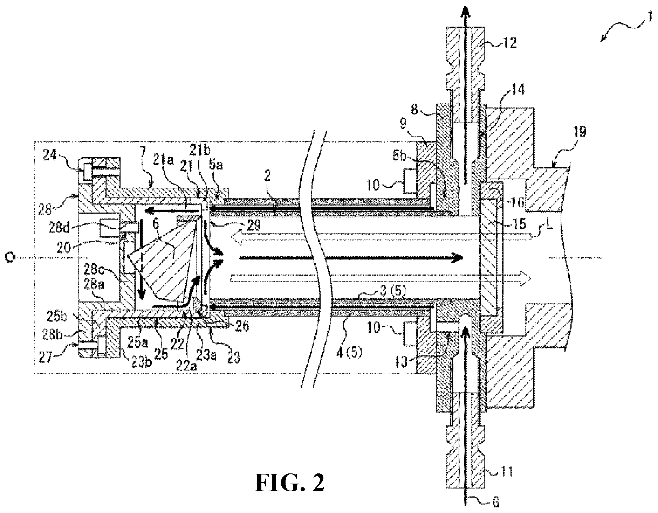

As illustrated in FIG. 1 and FIG. 2, a gas analyzer 1 according to one or more embodiments is, for example, configured to measure predetermined components in a measurement gas G using tunable diode laser absorption spectroscopy (TDLAS: tunable diode laser absorption spectroscopy) by irradiating, with a light L, the measurement gas G introduced into a measurement cell 2 and receiving the light L passing through the measurement gas G.

The gas analyzer 1 comprises an inner tube 3 making part of the measurement cell 2 and an outer tube 4 surrounding the inner tube 3. The inner tube 3 and outer tube 4 form a double tube 5 through which the measurement gas G is introduced into the inner tube 3 from between the inner tube 3 and the outer tube 4. The inner tube 3 and the outer tube 4 are each, for example, cylindrical. The inner tube 3 and the outer tube 4 are disposed concentrically. That is, the inner tube 3 and the outer tube 4 have a common central axis O. The inner tube 3 and the outer tube 4 may be disposed eccentrically.

Furthermore, the measurement cell 2 is provided with a reflector 6 for reflecting the light L and comprises an end member 7 located at one axial end part 5a of the double tube 5. The reflector 6 is a retroreflector, but it is not limited thereto. In one or more embodiments, the axial direction of the double tube 5 (hereinafter, also simply referred to as axial direction) means the direction along the central axis O. Furthermore, in one or more embodiments, a side on which the one axial end part 5a of the double tube 5 is located with respect to another axial end part 5b of the double tube 5 (that is, the left side in FIG. 2) is referred to as the one axial end side, and a side opposite thereto is referred to as the other axial end side.

In the other axial end part 5b of the double tube 5, an inner tube flange 8 is connected to the inner tube 3 by, for example, welding, and an outer tube flange 9 is connected to the outer tube 4 by, for example, welding. The outer tube flange 9 is connected to the inner tube flange 8 by a connector 10. The connector 10 is a bolt, but it is not limited thereto. It may be a fastener other than a bolt, and it may be a connector other than a fastener. Furthermore, these may be connected by means other than the connector 10, for example, welding or the like. However, it is preferable to configure such that the outer tube 4 can be attached to and detached from the inner tube 3 by attaching and detaching the connector 10 as a fastener. According to such a configuration, it is possible to easily maintain a flow path between the inner tube 3 and the outer tube 4 when dirtied with dust, condensation, or the like.

A supply plug 11 for passing the measurement gas G toward the measurement cell 2 and a discharge plug 12 for passing the measurement gas G discharged from the measurement cell 2 are mounted on the inner tube flange 8. Furthermore, a supply path 13 for allowing the measurement gas G to flow from the supply plug 11 to between the inner tube 3 and the outer tube 4 is formed by a hollow portion provided in the inner tube flange 8 and an annular groove provided in the outer tube flange 9, centered around the central axis O. Moreover, a discharge path 14 for allowing the measurement gas G to flow from between the inner tube 3 and the outer tube 4 to the discharge plug 12 is formed by a hollow portion provided in the inner tube flange 8. The supply path for supplying the measurement gas G to between the inner tube 3 and the outer tube 4 and the discharge path for discharging the measurement gas G from between the inner tube 3 and the outer tube 4 are not limited to the foregoing configuration and can be designed as appropriate.

The end part on the other axial end side of the measurement cell 2 comprises a window 15 mounted on the inner tube flange 8. The window 15 is formed from a material that transmits the light L but does not transmit the measurement gas G. Further, the window 15 is connected to an end face on the other axial end side of the inner tube flange 8 by a frame member 16 connected to the inner tube flange 8 by, for example, a connector. The configuration of the end part on the other axial end side of the measurement cell 2 is not limited thereto and can be designed as appropriate. As described above, in one or more embodiments, the measurement cell 2 comprises the inner tube 3, the end member 7 (more specifically, the reflector 6, a frame 26 described later, and a middle member 25 described later), the inner tube flange 8, and the window 15. A sealing material such as an O-ring is disposed between the members constituting the measurement cell 2 and the like as appropriate, but is not shown in the figures.

The gas analyzer 1 comprises an analyzer console 19 provided with a light emitting part 17 (e.g., light emitter) for irradiating the light L and a light receiving part 18 (e.g., light receiver) for receiving the light L. For example, the analyzer console 19 can measure, for example, the concentration of a predetermined component in the measurement gas G based on a difference in intensity of a component of a specific wavelength between the light L emitted by the light emitting part 17 and the light L received by the light receiving part 18, that is, absorbance, an optical path length of the light L within the measurement cell 2, the temperature of the measurement gas G within the measurement cell 2, and the like. Examples of the predetermined component include CO, CO₂, H₂O, CₙHₘ, NH₃, O₂, and the like. The end part on the one axial end side of the analyzer console 19 is connected to the inner tube flange 8 by, for example, a connector.

As indicated by the outlined arrow in FIG. 2, the light L emitted from the light emitting part 17 passes through the window 15, proceeds through the inside of the measurement cell 2 from the other axial end side to the one axial end side, is reflected by the reflector 6, proceeds through the inside of the measurement cell 2 from the one axial end side to the other axial end side, passes through the window 15, and is received by the light receiving part 18.

The gas analyzer 1 is not limited to comprising the reflector 6 as above and, for example, may be configured such that the light emitting part 17 and the light receiving part 18 are disposed sandwiching the measurement cell 2 in the axial direction.

In order to precisely measure, for example, the concentration of the predetermined component in the measurement gas G, it is preferable to directly measure the temperature of the measurement gas G near the measurement cell 2. Thus, in one or more embodiments, along with disposing a temperature sensor 20 on a back side of the reflector 6, the end member 7 is provided with an inflow port 21 for allowing the measurement gas G to flow from between the inner tube 3 and the outer tube 4 into the back side of the reflector 6 and an outflow port 22 for allowing the measurement gas G to flow out from the back side of the reflector 6 into the inner tube 3. The temperature sensor 20 may comprise, for example, a resistance temperature detector or a thermocouple.

The end member 7 comprises an outer member 23 connected to the end portion on the one axial end side of the outer tube 4 by, for example, welding; a middle member 25 connected to the outer member 23 by a connector 24; a frame 26 connected to the middle member 25 by, for example, fitting; and an inner member 28 connected to the middle member 25 by a connector 27. The end member 7 is not limited to such a member configuration.

The outer member 23 comprises an outer cylinder 23a and an outer flange 23b extending radially outward from the end on the one axial end side of the outer cylinder 23a. The middle member 25 comprises a middle cylinder 25a and a middle flange 25b extending radially outward from the end on the one axial end side of the middle cylinder 25a. The inner member 28 comprises an inner cylinder 28a, an inner flange 28b extending radially outward from the end on the one axial end side of the inner cylinder 28a, and an end part wall 28c extending radially inward from the end on the other axial end side of the inner cylinder 28a. An outer peripheral surface of the middle cylinder 25a contacts an inner peripheral surface of the outer cylinder 23a, and an outer peripheral surface of the inner cylinder 28a contacts an inner peripheral surface of the middle cylinder 25a. The outer flange 23b and the middle flange 25b are connected by the connector 24, and the middle flange 25b and the inner flange 28b are connected by the connector 27. The connectors 24 and 27 are each a bolt, but they are not limited thereto. They may be fasteners other than bolts, and they may be connectors other than fasteners. Furthermore, these may be connected by means other than the connectors 24 and 27, for example, welding or the like. However, it is preferable that a unit comprising the middle member 25, the inner member 28, the frame 26, the reflector 6, and the temperature sensor 20 be attached to and detached from the outer member 23 by attaching and detaching the connector 24 as a fastener. According to such a configuration, it is possible to easily perform maintenance for removing dust and the like adhering to and accumulating on the reflector 6, which hinders measurement.

The frame 26 is connected to the reflector 6 and holds the reflector 6. The inflow port 21 is formed by a notch part 21a provided on the outer peripheral surface of the frame 26 in the axial direction and a notch 21b provided at the end part on the other axial end side of the middle cylinder 25a. Furthermore, the outflow port 22 is formed by the notch part 22a provided at the end part on the one axial end side of the frame 26. The configuration of the inlet port 21 and the outlet port 22 is not limited thereto. The temperature sensor 20 is mounted on a mounting port 28d penetrating the end part wall 28c. The arrangement of the temperature sensor 20 is not limited thereto. For example, a hole part may be provided penetrating the outer cylinder 23a and the middle cylinder 25a, and the temperature sensor 20 may be disposed in the hole part. However, in this case, it becomes necessary to go through a process of attaching and detaching the temperature sensor 20 to and from the end member 7 when attaching and detaching the unit comprising the middle member 25, the inner member 28, the frame 26, and the reflector 6 to and from the outer member 23 for maintenance of the reflector 6. Accordingly, it is preferable to dispose the temperature sensor 20 on a mounting port 28d provided on the end part wall 28c.

The one axial end part 5a of the double tube 5 forms an introduction port 29 for introducing the measurement gas G from between the inner tube 3 and the outer tube 4 into the inner tube 3. The introduction port 29 comprises a gap between the inner tube 3 and the end part on the other axial end side of the middle cylinder 25a, but it is not limited thereto. Furthermore, one or more embodiments are configured to directly introduce the measurement gas G from between the inner tube 3 and the outer tube 4 into the inner tube 3 via the introduction port 29, but it is not limited thereto.

The measurement gas G flows into the supply path 13 through the supply plug 11, passes between the inner tube 3 and the outer tube 4, and at the one axial end part 5a of the double tube 5, splits into a stream flowing into the inner tube 3 via the introduction port 29 and a stream flowing into the back side of the reflector 6 via the inlet port 21 of the end member 7. The measurement gas G flowing into the back side of the reflector 6 flows into the inner tube 3 via the outlet port 22. The measurement gas G flowing into the inner tube 3 flows through the inside of the inner tube 3 from the one axial end side toward the other axial end side, flows into the discharge path 14, and is discharged through the discharge plug 12.

The gas analyzer 1 comprises a temperature adjuster 30 for adjusting the temperature of the double tube 5. The temperature adjuster 30 comprises a heating member 31 disposed on an outer peripheral surface of the outer tube 4, the above-described temperature sensor 20 for directly measuring the temperature of the measurement gas G, and a controller, not shown, for controlling the temperature of the heating member 31 based on a value measured by the temperature sensor 20. The heating member 31 is wound around the outer peripheral surface of the outer tube 4 in a coil shape. The heating member 31 comprises, for example, an electric heating element such as a heating wire or a heat exchanger such as a fluid tube through which a heating medium flows. The heating member 31 is not shown in FIG. 2. The temperature adjuster 30 can adjust the temperature of the double tube 5 using the heating member 31, for example, such that the value measured by the temperature sensor 20 becomes a desired target value. The temperature of the double tube 5 is adjusted to a desired temperature, for example, 100°C or higher.

The arrangement of the temperature sensor 20 is not limited to the back side of the reflector 6 such as described above. For example, the configuration may be such that the temperature sensor 20 is disposed in the inner tube 3 to directly measure the temperature in the measurement cell 2, and the configuration may be such that the temperature sensor 20 is disposed on the outer peripheral surface of the outer tube 4 to indirectly measure the temperature in the measurement cell 2. When disposing the temperature sensor 20 within the inner tube 3, the configuration may be such that a hole part is provided penetrating the double tube 5 in the radial direction and the temperature sensor 20 is disposed in the hole. However, in this case, the double tube 5 ceases to have the double tube structure in the portion where the hole is provided, and thus the function of mitigating the influence of the ambient temperature decreases accordingly. Furthermore, the double tube 5 ceases to have the double tube structure in the portion where the hole is provided, and thus the function of preheating the measurement gas G flowing between the inner tube 3 and the outer tube 4 using the heating member 31 disposed on the outer peripheral surface of the outer tube 4 before being introduced into the inner tube 3 decreases accordingly. Moreover, when configuring such that the temperature sensor 20 is disposed in the foregoing hole part, it becomes necessary to go through a process for attaching and detaching the temperature sensor 20 to and from the double tube 5 when maintaining the flow path between the inner tube 3 and the outer tube 4 by attaching and detaching the outer tube 4 to and from the inner tube 3. Accordingly, it is preferable to dispose the temperature sensor 20 on the back side of the reflector 6.

The configuration may be such that a temperature sensor for directly measuring the temperature of the double tube 5 is provided in place of or in addition to the above-described temperature sensor 20 for directly measuring the temperature of the measurement gas G and the temperature adjuster 30 comprises this temperature sensor. The heating member 31 is not limited to being coil-shaped. Furthermore, the heating member 31 is not limited to being disposed on the outer peripheral surface of the outer tube 4. The configuration may be such that the temperature adjuster 30 is not provided.

The gas analyzer 1 comprises a heat insulating member 32 surrounding the outer tube 4, the heating member 31, and the end member 7. The heat insulating member 32 is not shown in FIG. 2. The heat insulating member 32 can be made of a desired material, such as inorganic fiber or plastic foam. The heat insulating member 32 is preferably configured to surround the end member 7, but it may be configured to not surround the end member 7. Furthermore, the configuration may be such that the heat insulating member 32 is not provided.

Although the disclosure has been described with respect to only a limited number of embodiments, those skilled in the art, having benefit of this disclosure, will appreciate that various other embodiments may be devised without departing from the scope of the present invention, which is defined by the attached claims.

### Description of Reference Numerals

- 1: Gas analyzer
- 2: Measurement cell
- 3: Inner tube
- 4: Outer tube
- 5: Double tube
- 5a: One axial end part of double tube
- 5b: Other axial end part of double tube
- 6: Reflector
- 7: End member
- 8: Inner tube flange
- 9: Outer tube flange
- 10: Connector
- 11: Supply plug
- 12: Discharge plug
- 13: Supply path
- 14: Discharge path
- 15: Window
- 16: Frame member
- 17: Light emitting part
- 18: Light receiving part
- 19: Analyzer console
- 20: Temperature sensor
- 21: Inflow port
- 21a, 21b: Notch part
- 22: Outflow port
- 22a: Notch part
- 23: Outer member
- 23a: Outer cylinder
- 23b: Outer flange
- 24: Fastener
- 25: Middle member
- 25a: Middle cylinder
- 25b: Middle flange
- 26: Frame
- 27: Connector
- 28: Inner member
- 28a: Inner cylinder
- 28b: Inner flange
- 28c: End part wall
- 28d: Mounting port
- 29: Introduction port
- 30: Temperature adjuster
- 31: Heating member
- 32: Heat insulating member
- G: Measurement gas
- L: Light
- O: Central axis

## Claims

1. A gas analyzer (1) for measuring predetermined components in a measurement gas (G) introduced into a measurement cell (2) by irradiating the measurement gas (G) with light (L) from a light emitter and receiving the light (L) passing through the measurement gas (G) with a light receiver, the gas analyzer (1) comprising:
a measurement cell (2) comprising an inner tube (3);
an outer tube (4) surrounding the inner tube (3) and defining an annular space between the inner tube (3) and the outer tube (4), the annular space extending from a first axial end (5a) to a second axial end (5b) of the inner and outer tubes (3, 4); a supply (11) arranged at the second axial end (5b) for supplying the measurement gas (G) into the annular space;
an introduction port (29) arranged at the first axial end (5a) for introducing the measurement gas (G) into the inner tube (3); and
means for introducing the measurement gas (G) into the introduction port (29) from the annular space between the inner tube (3) and the outer tube (4).

2. The gas analyzer (1) according to claim 1, further comprising:
a discharge (12) for discharging the measurement gas (G) from the measurement cell (2) at the second axial end (5b).

3. The gas analyzer (1) according to claim 1, further comprising:
a temperature adjuster (30) configured to adjust a temperature of the inner tube (3) and the outer tube (4).

4. The gas analyzer (1) according to claim 3, wherein the temperature adjuster (30) is disposed on an outer peripheral surface of the outer tube (4).

5. The gas analyzer (1) according to claim 4, wherein the temperature adjuster (30) is wound around the outer peripheral surface in a coil shape.

6. The gas analyzer (1) according to any one of claims 3-5, wherein the temperature adjuster (30) comprises a heating wire.

7. The gas analyzer (1) according to claim 3, wherein the temperature adjuster (30) comprises a fluid tube disposed around the outer tube (4).

8. The gas analyzer (1) according to any one of claims 1-7, further comprising:
a heat insulator (32) surrounding the outer tube (4).

9. The gas analyzer (1) according to any one of claims 1-8, wherein the measurement cell (2) further comprises:
a reflector (6) configured to reflect the light (L), and
wherein the means for introducing the measurement gas (G) into the inner tube (3) comprises an end member (7) disposed at the first axial end of the inner tube (3) and the outer tube (4).

10. The gas analyzer (1) according to claim 9, wherein the reflector (6) is a retroreflector.

11. The gas analyzer (1) according to claim 9 or claim 10, wherein the reflector (6) is disposed in the end member (7).

12. The gas analyzer (1) according to any one of claims 9-11, wherein the end member (7) further comprises:
an inflow port (21) configured to let the measurement gas (G) flow towards a back side of the reflector (6) from the annular space between the inner tube (3) and the outer tube (4); and
an outflow port (22) configured to let the measurement gas (G) flow into the introduction port (29) from the back side of the reflector (6); and
a temperature sensor (20) disposed on the back side of the reflector (6).

13. The gas analyzer (1) according to claim 12, wherein the reflector (6) is disposed between the temperature sensor (20) and the inflow and outflow ports (21, 22).

14. The gas analyzer (1) according to any one of claims 1-13, wherein the gas analyzer (1) is a laser gas analyzer configured to use tunable diode laser absorption spectroscopy.

15. A gas analyzer system comprising a gas analyzer (1) as defined in any one of claims 1-14, a light emitter (17) for irradiating light (L) to a measurement gas (G) introduced into the measurement cell (2), and a light receiver (18) for receiving the light (L) passing through the measurement gas (G).

16. A method for measuring predetermined components in a measurement gas (G) introduced into a measurement cell (2) by irradiating the measurement gas (G) with light (L) from a light emitter and receiving the light (L) passing through the measurement gas (G) with a light receiver, the method comprising:
providing a measurement cell (2) comprising an inner tube (3);
providing an outer tube (4) surrounding the inner tube (3) and defining an annular space between the inner tube (3) and the outer tube (4), the annular space extending from a first axial end (5a) to a second axial end (5b) of the inner and outer tubes (3, 4);
supplying the measurement gas (G) into the annular space at the second axial end (5b);
conveying the measurement gas (G) through the annular space to the first axial end (5a); and
introducing the measurement gas (G) into the inner tube (3) via an introduction port (29) arranged at the first axial end (5a).

17. The method according to claim 16, further comprising:
discharging the measurement gas (G) from the measurement cell (2) at the second axial end (5b).

## Patentansprüche

1. Gasanalysator (1) zum Messen vorgegebener Komponenten in einem Messgas (G), das in eine Messzelle (2) eingeleitet wird, durch Bestrahlen des Messgases (G) mit Licht (L) von einem Lichtemitter und Empfangen des Lichts (L), das das Messgas (G) durchlässt, mit einem Lichtempfänger, wobei der Gasanalysator (1) aufweist:
eine Messzelle (2), die ein Innenrohr (3) aufweist;
ein Außenrohr (4), das das Innenrohr (3) umgibt und einen ringförmigen Raum zwischen dem Innenrohr (3) und dem Außenrohr (4) definiert, wobei sich der ringförmige Raum von einem ersten axialen Ende (5a) zu einem zweiten axialen Ende (5b) des Innen- und Außenrohrs (3, 4) erstreckt; eine am zweiten axialen Ende (5b) ausgebildete Zuführung (11) zum Zuführen des Messgases (G) in den ringförmigen Raum;
einen am ersten axialen Ende (5a) ausgebildeten Einleitungsanschluss (29) zum Einleiten des Messgases (G) in das Innenrohr (3); und
Mittel zum Einleiten des Messgases (G) in den Einleitungsanschluss (29) aus dem Ringraum zwischen dem Innenrohr (3) und dem Außenrohr (4).

2. Gasanalysator (1) nach Anspruch 1, der ferner aufweist:
einen Auslass (12) zum Auslassen des Messgases (G) aus der Messzelle (2) am zweiten axialen Ende (5b).

3. Gasanalysator (1) nach Anspruch 1, der ferner aufweist:
einen Temperaturregler (30), der zum Einstellen einer Temperatur des Innenrohrs (3) und des Außenrohrs (4) konfiguriert ist.

4. Gasanalysator (1) nach Anspruch 3, wobei der Temperaturregler (30) an einer äußeren Umfangsfläche des Außenrohrs (4) angeordnet ist.

5. Gasanalysator (1) nach Anspruch 4, wobei der Temperaturregler (30) in Form einer Spule um die äußere Umfangsfläche gewickelt ist.

6. Gasanalysator (1) nach einem der Ansprüche 3 bis 5, wobei der Temperaturregler (30) einen Heizdraht aufweist.

7. Gasanalysator (1) nach Anspruch 3, wobei der Temperaturregler (30) ein um das Außenrohr (4) angeordnetes Fluidrohr aufweist.

8. Gasanalysator (1) nach einem der Ansprüche 1 bis 7, der ferner aufweist:
einen Wärmeisolator (32), der das Außenrohr (4) umgibt.

9. Gasanalysator (1) nach einem der Ansprüche 1 bis 8, wobei die Messzelle (2) ferner aufweist:
einen Reflektor (6), der konfiguriert ist, um das Licht (L) zu reflektieren, und
wobei das Mittel zum Einführen des Messgases (G) in das Innenrohr (3) ein Endteil (7) aufweist, das an dem ersten axialen Ende des Innenrohrs (3) und des Außenrohrs (4) angeordnet ist.

10. Gasanalysator (1) nach Anspruch 9, wobei der Reflektor (6) ein Retroreflektor ist.

11. Gasanalysator (1) nach Anspruch 9 oder 10, wobei der Reflektor (6) in dem Endteil (7) angeordnet ist.

12. Gasanalysator (1) nach einem der Ansprüche 9 bis 11, wobei das Endteil (7) ferner aufweist:
einen Einlassanschluss (21), der konfiguriert ist, um das Messgas (G) aus dem Ringraum zwischen dem Innenrohr (3) und dem Außenrohr (4) zu einer Rückseite des Reflektors (6) strömen zu lassen; und
einen Auslassanschluss (22), der konfiguriert ist, um das Messgas (G) von der Rückseite des Reflektors (6) in den Einleitungsanschluss (29) strömen zu lassen; und
einen Temperatursensor (20), der auf der Rückseite des Reflektors (6) angeordnet ist.

13. Gasanalysator (1) nach Anspruch 12, wobei der Reflektor (6) zwischen dem Temperatursensor (20) und den Einlass- und Auslassanschlüssen (21, 22) angeordnet ist.

14. Gasanalysator (1) nach einem der Ansprüche 1 bis 13, wobei der Gasanalysator (1) ein Lasergasanalysator ist, der so konfiguriert ist, dass er abstimmbare Diodenlaser-Absorptionsspektroskopie benutzt.

15. Gasanalysesystem mit einem Gasanalysator (1) nach einem der Ansprüche 1 bis 14, einem Lichtemitter (17) zur Bestrahlung eines in die Messzelle (2) eingeführten Messgases (G) mit Licht (L) und einem Lichtempfänger (18) zum Empfang des durch das Messgas (G) durchgelassenen Lichts (L).

16. Verfahren zum Messen vorgegebener Komponenten in einem Messgas (G), das in eine Messzelle (2) eingeführt wird, durch Bestrahlen des Messgases (G) mit Licht (L) von einem Lichtemitter und Empfangen des Lichts (L), das das Messgas (G) durchlässt, mit einem Lichtempfänger, wobei das Verfahren folgenden Schritt aufweist:
Bereitstellen einer Messzelle (2), die ein Innenrohr (3) aufweist;
Bereitstellen eines Außenrohrs (4), das das Innenrohr (3) umgibt und einen ringförmigen Raum zwischen dem Innenrohr (3) und dem Außenrohr (4) definiert, wobei sich der ringförmige Raum von einem ersten axialen Ende (5a) zu einem zweiten axialen Ende (5b) des Innen- und Außenrohrs (3, 4) erstreckt;
Zuführen des Messgases (G) in den ringförmigen Raum am zweiten axialen Ende (5b);
Fördern des Messgases (G) durch den ringförmigen Raum zu dem ersten axialen Ende (5a); und
Einleiten des Messgases (G) in das Innenrohr (3) über einen Einleitungsanschluss (29), der am ersten axialen Ende (5a) ausgebildet ist.

17. Verfahren nach Anspruch 16, das ferner folgenden Schritt aufweist:
Ablassen des Messgases (G) aus der Messzelle (2) am zweiten axialen Ende (5b).

## Revendications

1. Analyseur de gaz (1) pour mesurer des composants prédéterminés dans un gaz de mesure (G) introduit dans une cellule de mesure (2) en irradiant le gaz de mesure (G) avec de la lumière (L) provenant d'un émetteur de lumière et en recevant la lumière (L) traversant le gaz de mesure (G) avec un récepteur de lumière, l'analyseur de gaz (1) comprenant :
une cellule de mesure (2) comprenant un tube interne (3) ;
un tube externe (4) entourant le tube interne (3) et définissant un espace annulaire entre le tube interne (3) et le tube externe (4), l'espace annulaire s'étendant d'une première extrémité axiale (5a) à une seconde extrémité axiale (5b) des tubes interne et externe (3, 4) ; une alimentation (11) disposée à la seconde extrémité axiale (5b) pour fournir le gaz de mesure (G) dans l'espace annulaire ;
un orifice d'introduction (29) disposé à la première extrémité axiale (5a) pour introduire le gaz de mesure (G) dans le tube interne (3) ; et
des moyens pour introduire le gaz de mesure (G) dans l'orifice d'introduction (29) à partir de l'espace annulaire entre le tube interne (3) et le tube externe (4).

2. Analyseur de gaz (1) selon la revendication 1, comprenant en outre : une évacuation (12) pour évacuer le gaz de mesure (G) de la cellule de mesure (2) à la seconde extrémité axiale (5b).

3. Analyseur de gaz (1) selon la revendication 1, comprenant en outre :
un dispositif de réglage de température (30) configuré pour ajuster la température du tube interne (3) et du tube externe (4).

4. Analyseur de gaz (1) selon la revendication 3, dans lequel le dispositif de réglage de température (30) est disposé sur une surface périphérique extérieure du tube externe (4).

5. Analyseur de gaz (1) selon la revendication 4, dans lequel le dispositif de réglage de température (30) est enroulé autour de la surface périphérique extérieure sous forme de bobine.

6. Analyseur de gaz (1) selon l'une quelconque des revendications 3 à 5, dans lequel le dispositif de réglage de température (30) comprend un fil chaud.

7. Analyseur de gaz (1) selon la revendication 3, dans lequel le dispositif de réglage de température (30) comprend un tube de fluide disposé autour du tube externe (4).

8. Analyseur de gaz (1) selon l'une quelconque des revendications 1 à 7, comprenant en outre un isolant thermique (32) entourant le tube externe (4).

9. Analyseur de gaz (1) selon l'une quelconque des revendications 1 à 8, dans lequel la cellule de mesure (2) comprend en outre :
un réflecteur (6) configuré pour réfléchir la lumière (L), et
dans lequel le moyen d'introduction du gaz de mesure (G) dans le tube interne (3) comprend un élément d'extrémité (7) disposé à la première extrémité axiale du tube interne (3) et du tube externe (4).

10. Analyseur de gaz (1) selon la revendication 9, dans lequel le réflecteur (6) est un rétroréfl ecteur.

11. Analyseur de gaz (1) selon la revendication 9 ou la revendication 10, dans lequel le réflecteur (6) est disposé dans l'élément d'extrémité (7).

12. Analyseur de gaz (1) selon l'une quelconque des revendications 9 à 11, dans lequel l'élément d'extrémité (7) comprend en outre :
un orifice d'entrée (21) configuré pour laisser le gaz de mesure (G) s'écouler vers une face arrière du réflecteur (6) à partir de l'espace annulaire entre le tube interne (3) et le tube externe (4) ; et
un orifice de sortie (22) configuré pour laisser le gaz de mesure (G) s'écouler dans l'orifice d'introduction (29) à partir de la face arrière du réflecteur (6) ; et
un capteur de température (20) disposé sur la face arrière du réflecteur (6).

13. Analyseur de gaz (1) selon la revendication 12, dans lequel le réflecteur (6) est disposé entre le capteur de température (20) et les orifices d'entrée et de sortie (21, 22).

14. Analyseur de gaz (1) selon l'une quelconque des revendications 1 à 13, dans lequel l'analyseur de gaz (1) est un analyseur de gaz à laser configuré pour utiliser la spectroscopie d'absorption laser à diode accordable.

15. Système d'analyse de gaz comprenant un analyseur de gaz (1) tel que défini dans l'une quelconque des revendications 1 à 14, un émetteur de lumière (17) pour irradier de la lumière (L) vers un gaz de mesure (G) introduit dans la cellule de mesure (2), et un récepteur de lumière (18) pour recevoir la lumière (L) traversant le gaz de mesure (G).

16. Procédé de mesure de composants prédéterminés dans un gaz de mesure (G) introduit dans une cellule de mesure (2) en irradiant le gaz de mesure (G) avec de la lumière (L) provenant d'un émetteur de lumière et en recevant la lumière (L) traversant le gaz de mesure (G) avec un récepteur de lumière, le procédé comprenant :
la fourniture d'une cellule de mesure (2) comprenant un tube interne (3) ;
la fourniture d'un tube externe (4) entourant le tube interne (3) et définissant un espace annulaire entre le tube interne (3) et le tube externe (4), l'espace annulaire s'étendant d'une première extrémité axiale (5a) à une seconde extrémité axiale (5b) des tubes interne et externe (3, 4) ;
la fourniture du gaz de mesure (G) dans l'espace annulaire à la seconde extrémité axiale (5b) ;
l'acheminement du gaz de mesure (G) à travers l'espace annulaire jusqu'à la première extrémité axiale (5a) ; et
l'introduction du gaz de mesure (G) dans le tube interne (3) par un orifice d'introduction (29) disposé à la première extrémité axiale (5a).

17. Procédé selon la revendication 16, comprenant en outre :
l'évacuation du gaz de mesure (G) de la cellule de mesure (2) à la seconde extrémité axiale (5b).
